# EUROPEAN PATENT APPLICATION

(11) **EP 2 439 991 A1**
(43) Date of publication of application: **11.04.2012**
(21) Application number: 09846721.0
(22) Date of filing: 21.12.2009
(51) Int. Cl.: H04W 64/00

(54) **MOBILITY MANAGEMENT METHOD AND SYSTEM FOR TERMINAL IN WIRELESS RELAY SYSTEM**

(30) Priority: 03.07.2009 CN 200910088504
(71) Applicant: ZTE Corporation, Shenzhen, Guangdong 518057 (CN)
(72) Inventor: SHEN, Xiaoqin, Shenzhen Guangdong 518057 (CN); HAN, Lifeng, Shenzhen Guangdong 518057 (CN); MA, Rui, Shenzhen Guangdong 518057 (CN)
(74) Representative: Howson, Richard G.B.
(86) International application number: PCT/CN2009/075754
(87) International publication number: WO 2011/000193

(57) **Abstract**

A method and system for mobility management of a User Equipment (UE) in a radio relay system is used for resolving the technical problem of performing a UE handover between different relay stations belonging to a same Donor eNodeB (DeNB). The method comprises that: an X2 interface link is established between the relay stations belonging to one DeNB; a source relay station transmits a handover request to a target relay station, and the target relay station performs admission control; when the target relay station permits the UE to access, the source relay station performs forwarding of UE context and cached data; after the UE has successfully accessed the target relay station, the target relay station notifies the DeNB that the path has changed, and the DeNB performs a path handover. In the handover flow of the disclosure, only some control for forwarding data is needed between the source relay station and the target relay station, the forwarding through the DeNB and the processing with a Mobility Management Unit (MME) or a Serving GateWay (GW) are not needed, therefore the handover flow is simplified, and handover delay is decreased to a certain extent.

## Description

### TECHNICAL FIELD

The disclosure relates to the field of radio communications, particularly to a method and system for mobility management of a terminal in a radio relay system.

### BACKGROUND

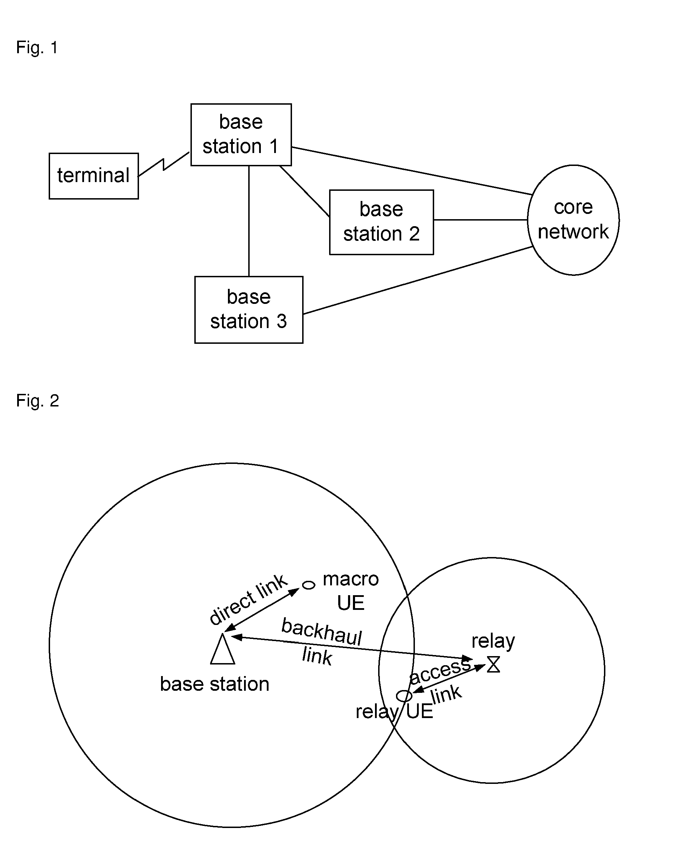

As shown in Fig. 1, a cellular radio communication system is mainly composed of a terminal, an access network and a Core Network (CN). A network formed of a base station or a base station plus a base station controller is called a Radio Access Network (RAN) which is responsible for business of an access layer, e.g. management of radio resources. A physical or a logical connection is allowed between the base stations according to the actual conditions, for example, between base station 1 and base station 2 or base station 3 shown in Fig. 1. Each base station can be connected with one or more CN nodes. The CN is responsible for business of a non-access layer, such as location updating, and is an anchor point of a user plane. A terminal can be various devices in communication with a cellular radio communication network, for example, a mobile phone or a laptop computer

In the cellular radio communication system, radio coverage of a fixed base station network is limited due to various reasons, for example, inevitable coverage loopholes existing in the coverage of a radio network are caused by reasons of various building structures blocking radio signals, etc. In another aspect, weakened intensity of radio signals and interference from neighboring cells in a cell edge area will result in bad communication quality and over high error rate of radio transmission of a User Equipment (UE) in the cell edge. In order to increase data transmission throughput, throughput in the cell edge area, coverage of new regions and improve group mobility and temporary network deployment, one solution is to introduce a radio network node, which is called a relay, into the cellular radio communication system.

The relay, also known as a Relay Node (RN)/relay station, is a station capable of relaying data and possible control information through radio link among other network nodes. The operating principle of the relay is shown as Fig. 2. A UE directly served by a base station is called a macro UE, and a UE served by a relay is called a relay UE.

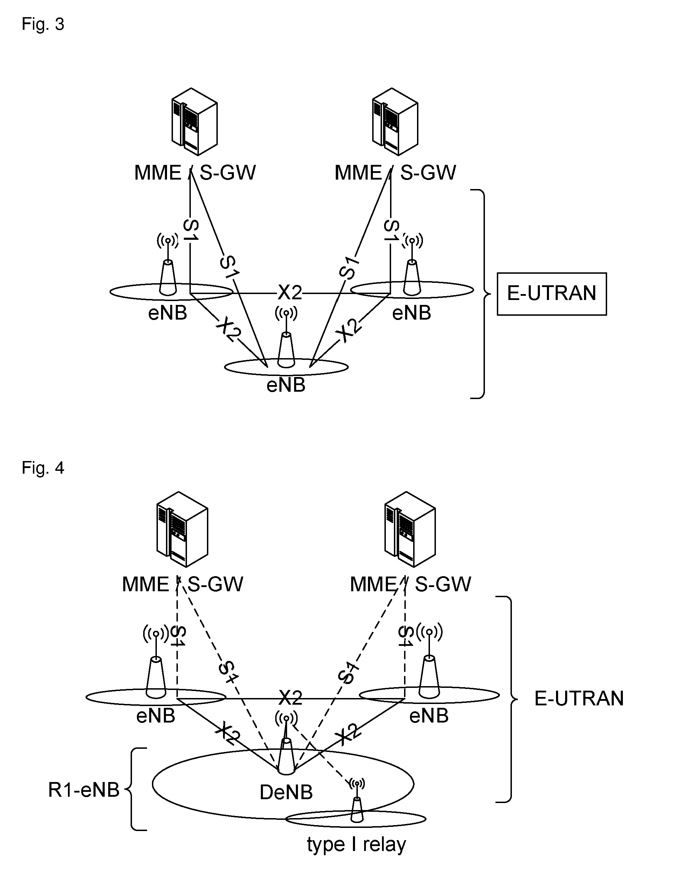

The definitions of interfaces among all network elements are as follows:
Direct Link: a radio link between a base station and a UE, comprising a DownLink/UpLink (DL/UL) direct link;
Access Link: a link between a relay and a UE, comprising a DL/UL access link;
Backhaul Link: a radio link between a base station and a relay, comprising a DL/UL relay link.
Among various types of relays, a type of relay, which is called a type I relay, has the following characteristics:
   the UE cannot distinguish a cell under a relay or a cell under a fixed base station, that is, the cell under a relay is the same as the cell under a base station for the UE; the cell under a relay can be called as a relay cell; same as all cells, the relay cell has its own Physical Cell Identity (PCI) and sends broadcasts as a normal cell; when the UE resides in a relay cell, the relay cell can independently allocate and schedule radio resources for the use of the UE, which is independent from radio resources scheduling of a base station involved in the relay (i.e. a Donor eNodeB, DeNB, that is a base station connected with the relay via the backhaul link); the interface and protocol stack between a relay cell and a relay UE are the same as those between a normal base station cell and a UE.
A Long Term Evolution (LTE) system, which adopts an Internet Protocol (IP)-based flat architecture, as shown in Fig. 3, comprises an Evolved Universal Terrestrial Radio Access Network (E-UTRAN), a CN node and other supporting nodes; wherein the CN node comprises a Mobility Management Entity (MME) and a Serving GateWay (S-GW). The MME is responsible for control plane-related work such as mobility management, processing of non-access layer signaling, mobility management of a user, management of context, etc.; and the S-GW is responsible for data transmission, forwarding, route handover of a UE user plane; the eNBs are connected with each other on logic via an X2 interface to support the mobility of a UE in the whole network and ensure seamless handover of a user. Each eNB is connected to a System Architecture Evolution (SAE) CN via an S1 interface, that is, each eNB is connected to the MME via an S1-MME interface of the control plane and connected to the S-GW via an S1-U interface of the user plane; wherein the S1 interface supports a multipoint connection between the eNB and the MME, and between the eNB and the S-GW. Each eNB performs transmission of signaling and data with the UE via a Uu interface (initially defined as a radio interface between the UTRAN and the UE).

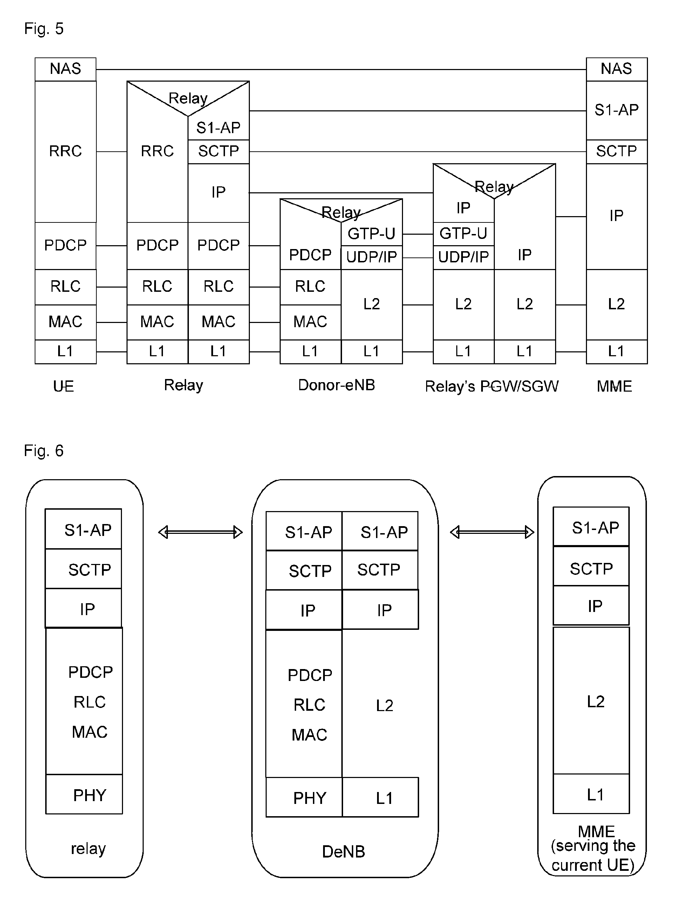

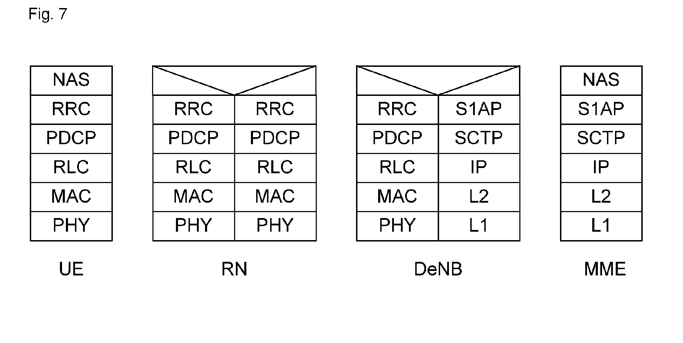

After the relay cell is introduced, the network architecture of the LTE is shown as Fig. 4. In the 66^{th} conference of 3GPP RAN#2, the question of how to perform UE data relay for the interface between the relay and the DeNB has been intensively discussed. The relay and the DeNB have the following major types of protocol stacks: the first type is that the S1 interface is terminated at the relay (comprising three schemes) and the second type is that the S1 interface is terminated at the DeNB (comprising one scheme).
Scheme 1: Full-L3 relay, completely transparent to the DeNB
   this scheme is put forward by Qualcomm Europe Company and the control plane architecture thereof is shown as Fig. 5; wherein the relay is completely transparent to the DeNB; an S1 Application Protocol (S1-AP) is added to the relay to be directly connected with the MME; and a relay Proxy GateWay (PGW)/Serving GateWay (SGW) network element is added between the DeNB and the MME, thereby reducing modification to the protocol of the DeNB, but increasing network delay to a certain extent.
Scheme 2: Proxy S1/X2 (the RN seems like a cell under the DeNB for the MME)
   this scheme is put forward by Ericsson Company and the control plane architecture thereof is shown as Fig. 6; the major idea of the scheme is to apply an S1 AP proxy to the DeNB; the S1 AP proxy is transparent to both the MME and the relay; for the MME, the UE seems like to be directly connected to the DeNB; and for the relay, the UE seems like to be in direct conversation with the MME.
Scheme 3: the RN bear is terminated at the RN
   this scheme is put forward by Samsung Company; actually, the scheme is a special example of scheme 1, that is, the functions of the DeNB and the relay PGW/SGW in alternative 1 are incorporated in the DeNB and some modification is made to the protocol of the DeNB.
Scheme 4: S1 is terminated at the DeNB
   this scheme is put forward by Huawei Company and the control plane architecture thereof is shown as Fig. 7; in this scheme, there is no S1-AP protocol at the relay side, that is, the S1-AP protocol function is completed by Radio Resources Control (RRC).

Most companies currently support that the S1 terminates at the relay, thus the priority of scheme 4 is relatively low. At the same time, Samsung Company also has put forward its own scheme as a special case of scheme 1. Therefore, it is a game between scheme 1 and scheme 2 at present.

Based on the system architecture of scheme 2, the disclosure provides a flow, at a control plane and a user plane, of a UE handover from a relay to another relay belonging to the same DeNB.

### SUMMARY

In view of this, the disclosure provides a method for mobility management of a terminal in a radio relay system, to solve a technical problem of performing a handover of a UE between different relays belonging to one DeNB.

In order to achieve the aforementioned purpose, the disclosure provides the following technical solutions.

A method for mobility management of a terminal in a radio relay system comprises the following steps:
step A: an X2 interface link is established between relay stations belonging to one DeNB; and
step B: a cell handover between relay stations belonging to one DeNB is performed via the X2 interface.

Preferably, step B may comprise the following steps:
step B1: a source relay station sends a handover request to a target relay station, and the target relay station performs admission control;
step B2: when the target relay station permits the UE to access, the source relay station performs forwarding of UE context and cached data; and
step B3: after the UE has successfully accessed the target relay station, the target relay station notifies the DeNB that a path has changed, and the DeNB performs a path handover.

Preferably, step B1 may comprise the following steps:
step B11: the source relay station performs a handover determination according to a measurement report sent by the UE; when a UE handover is permitted, step B12 is executed;
step B12: the source relay station sends a handover request message to the target relay station via the X2 interface, wherein the handover request message includes a UL/DL GTP-U address of the source relay station; and
step B13: the target relay station performs admission control; when the UE is permitted to access the target relay station, a handover request response message is sent to the source relay station via the X2 interface, wherein the handover request response message includes a UL/DL GTP-U address of the target relay station;
step B14: the source relay station sends a handover command to the UE.

Preferably, step B2 may comprise the following steps:
step B21: the source relay station sends a serving network status transition command to the target relay station and forwards the UE context and the cached data to the target relay station; and
step B22: the UE performs synchronization to the target relay station, and the target station sends a network response including UL resource allocation and timing advance to the UE.

Preferably, step B3 may comprise the following steps:
step B31: after the UE has successfully accessed the target relay station, the target relay station sends a downlink path handover request to the DeNB;
step B32: the DeNB processes the downlink path handover request and sends a downlink path handover response to the target relay station; and
step B33: the target relay station notifies the source relay station to release the UE context, and the source relay station releases resources.

Another purpose of the disclosure is to provide a system for mobility management of a terminal in a radio relay system. In order to realize the aforementioned purpose, the technical solution of the disclosure is realized by the followings.

A system for mobility management of a terminal in a radio relay system, comprises a UE, a source relay station and a target relay station belonging to one DeNB and a DeNB, wherein an X2 interface is established between the source relay station and the target relay station, and a cell handover of the UE is performed between the source relay station and the target relay station is realized via the X2 interface.

Preferably, a source base station may comprise:
a handover determination module configured to perform a handover determination according to a measurement report sent by the UE and notify a handover request module to perform a UE handover when the UE handover is permitted;
a handover request module configured to send a handover request message to the target relay station via the X2 interface, wherein the handover request message includes a UL/DL GTP-U address of the source relay station;
a handover notification module configured to send a handover command to the UE after receiving a handover request response message from the target relay station which has permitted an access of the UE;
a network status transition notification module configured to send a serving network status transition command to the target relay station and forward UE context and cached data to the target relay station.

Preferably, the target relay station may comprise:
an admission execution module configured to perform admission control according to the handover request message sent by the handover requesting module of the source relay station and notify a handover request response module to perform the access of the UE when the access of the UE is permitted;
a handover request response module configured to send a handover request response message to the source relay station via the X2 interface, wherein the handover request response message includes a UL/DL GTP-U address of the target relay station;
a downlink resource allocation module configured to send a network response, which includes downlink resource allocation and timing advance, to the UE for the UE to perform synchronization and access to the target relay station;
a path handover request module configured to send a DL handover request to the DeNB after the UE has successfully accessed the target relay station; and
a resource release notification module configured to notify the source relay station to release the UE context after receiving the downlink path handover request.

Preferably, the DeNB may comprise:
a link handover module configured to process the DL handover request and send a path handover response to the target relay station.

In the handover procedure of the disclosure, only some control for forwarding data is needed between the source relay station and the target relay station, the forwarding through the DeNB and the processing with an MME/S-GW are not needed, therefore the handover flow is simplified, and handover delay is decreased to a certain extent.

### BRIEF DESCRIPTION OF THE DRAWINGS

Fig. 1 is a structure diagram showing a cellular radio communication system in the prior art;
Fig. 2 is a structure diagram of a relay network;
Fig. 3 is architecture of an LTE network;
Fig. 4 is architecture of an LTE network after a relay is added;
Fig. 5 is a control plane protocol stack of scheme 1;
Fig. 6 is a control plane protocol stack of scheme 2;
Fig. 7 is a control plane protocol stack of scheme 4;
Fig. 8 is a flow diagram showing a method for mobility management of a terminal in a radio relay system of the disclosure; and
Fig. 9 is a schematic diagram showing a structure of a mobility management system of a terminal in a radio relay system of the disclosure.

### DETAILED DESCRIPTION

In order to make the purpose, technical solution and advantages of the disclosure more clear, the disclosure is further illustrated in details in conjunction with the embodiments and the accompanying drawings.

Under the system architecture of scheme 2, an X2 interface is established between a source relay and a target relay to realize a handover of a UE between different relays belonging to one DeNB in the disclosure.

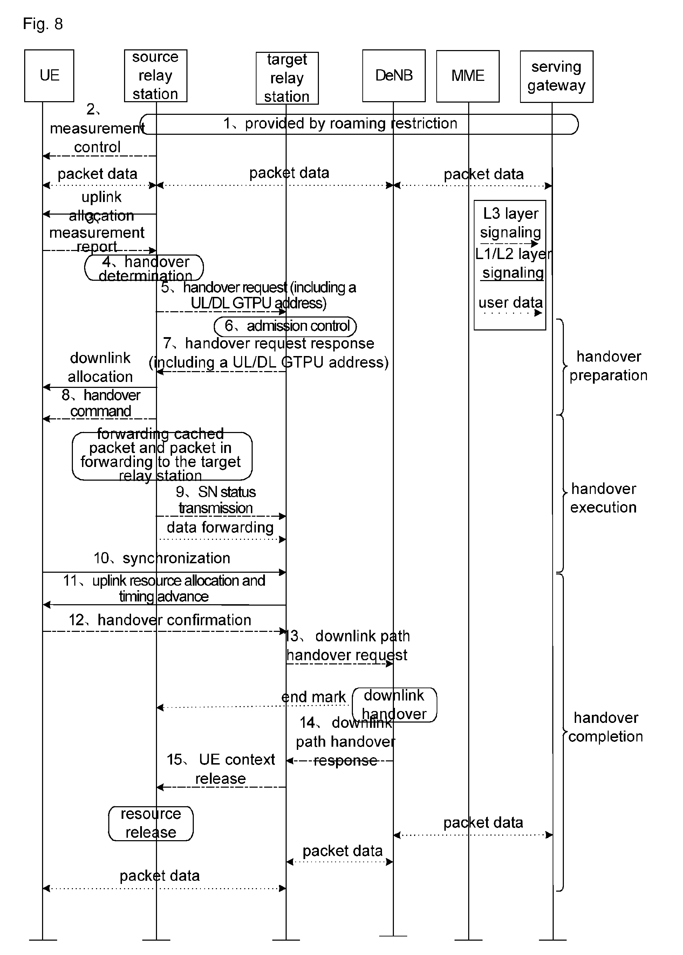

As shown in Fig. 8, the control plane handover flow comprises the following steps:
Step 1: UE context in a source relay includes roaming restriction-related information provided when a connection is established or a tracking area information is last updated;
Step 2: the source relay configures a UE measurement procedure according to the roaming restriction-related information and the measurement provided by the source relay facilitates controlling connection mobility of the UE;
Step 3: the UE sends a measurement report according to standards set by system information, norms, and the like;
Step 4: the source relay performs a UE handover determination according to the measurement report sent by the UE and Radio Resources Management (RRM) information;
Step 5: the source relay sends a handover request to a target relay to request the target relay to make preparation for a handover, wherein the handover request includes an Uplink/Downlink (UL/DL) General Package Radio Service (GPRS) Tunneling Protocol for a User plane (GTP-U) address of an up/down link of the source relay;
Step 6: the target relay performs admission control if it accepts the handover request from the source relay; wherein the target relay configures required resources according to received Quality of Service (QoS) information of SAE bear and retains a Cell Radio Network Temporary Identifier (C-RNTI) parameter and an optional random access preamble parameter;
Step 7: the target relay prepares the handover on Layer 1/Layer 2 (L1/L2) and sends a handover request response message to the source relay, wherein the handover request response message includes a UL/DL GTP-U address of the target relay;
a handover request confirmation message contains a transparent container, a new C-RNTI and some other parameters, e.g. an access parameter, a System Information Block (SIB), etc., and may also contain information of Radio Network Layer (RNL)/Transmission Network Layer (TNL);
Step 8: the source relay sends to the UE a handover command which comprises the transparent container from the target relay, and completes calculation of necessary integrity protection and the message; the UE receives the handover command including basic parameters (the new C-RNTI, possible starting time, the SIB of the target relay and etc.) and the handover is performed according to the command of the source relay;
since the UE belongs to a cell served by a same macro base station, it does not need to depart from the original cell to be synchronized to a new cell;
Step 9: the source relay sends a serving network status transition command to the target relay;
after sending the handover command to the UE, the source relay performs forwarding of the UE context and cached data, and forwards the UE context and the cached packet data and packet data in forwarding to the target relay;
Step 10: the UE initiates a synchronization request to the target relay and prepares to access the target relay station via a random access flow;
Step 11: the target relay sends a network response including uplink resource allocation and timing advance to the UE;
   wherein the uplink resource allocation is allocating radio resources for the UE to perform uplink transmission, the timing advance can enable synchronization of the UE to the target relay.
Step 12: after accessing the target relay successfully, the UE sends to the target relay a handover confirmation message which includes the C-RNTI of the UE to indicate the completion of the handover procedure of the UE, and the target relay checks the C-RNTI in the handover confirmation message and can directly send data to the UE;
Step 13: after the handover is performed, the target relay sends a downlink path handover request to the DeNB;
   at the moment, it is unnecessary to notify the MME/SAE GW of the change of the downlink path, because the path from the MME/SAE GW to the DeNB is unchanged, but the change of downlink data path has to be notified to the DeNB;
Step 14: the DeNB processes the downlink path handover request and sends a path handover response to the target relay;
Step 15: the target relay notifies the source relay to release the UE context, and the source relay releases the resources and the handover is completed; the UE then establishes a packet data service with the target relay and the MME establishes a packet data service to the target relay via the DeNB.

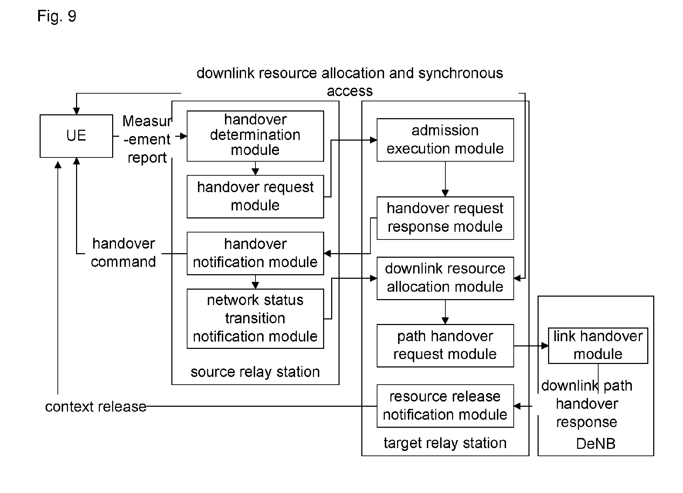

Fig. 9 is a logical structure diagram of the system of the disclosure, comprising a UE, a source relay station, a target relay station and a DeNB. According to the disclosure, an X2 interface is established between the source relay station and the target relay station, and a cell handover of the UE between the relay stations belonging to one DeNB is realized via the X2 interface between the source relay station and the target relay station in the system.

The UE sends measurement report to the source relay station, a handover determination module of the source relay station performs a handover determination according to the measurement report sent by the UE; when the UE handover is permitted, a handover request module of the source relay station sends a handover request message to the target relay station via the X2 interface; an admission execution module of the target relay station performs admission control according to the handover request message; when the UE access is permitted, a handover request response module then sends a handover request response message via the X2 interface to the source relay station; after the source relay station has received the handover request response, a handover notification module of the source relay station sends a handover command to the UE; after the source relay station has sent the handover command to the UE, a network status transition notification module of the source relay station sends a serving network status transition command to the target relay station and forwards a data packet in buffer to the target relay station. After receiving the handover command, the UE initiates synchronization with the target relay station and a random access process, a downlink resource allocation module of the target relay station sends a network response, which includes uplink resource allocation and timing advance, to the UE for the UE to perform the synchronization and access to the target relay station. After the UE has synchronized and accessed to the target relay station, a path handover request module sends a downlink handover request to the DeNB; the DeNB processes the DL handover request and sends a path handover response to the target relay station. After the target relay station has received the link handover response, a resource release notification module notifies the source relay station to release the UE context.

What is discussed above are only preferred embodiments of the disclosure and not intended to limit the protection scope of the disclosure.

## Claims

1. A method for mobility management of a terminal in a radio relay system, comprising:
A: establishing an X2 interface link between relay stations belonging to one base station involved in a relay (DeNB);
B: performing a cell handover of a User Equipment (UE) between a source relay station and a target relay station belonging to the DeNB via the X2 interface.

2. The method of claim 1, wherein step B comprises:
B1: sending, by the source relay station, a handover request to the target relay station which then performs admission control;
B2: forwarding, by the source relay station, UE context and cached data when the target relay station permits the UE to access; and
B3: notifying, by the target relay station, the DeNB that a path has changed after the UE successfully accesses the target relay station; and performing, by the DeNB, a path handover.

3. The method of claim 2, wherein step B1 comprises:
B11: performing, by the source relay station, a handover determination according to a measurement report sent by the UE;
B12: sending, by the source relay station, a handover request message to the target relay station via the X2 interface when the source relay station permits the UE to perform a handover; wherein the handover request message includes an Uplink/Downlink (UL/DL) General Package Radio Service (GPRS) Tunneling Protocol for a User plane (GTP-U) address of an of the source relay station;
B13: performing, by the target relay station, admission control, and sending a handover request response message to the source relay station via the X2 interface when the target relay station permits the UE to access; wherein the handover request response message includes a UL/DL GTP-U address of the up/down link of the target relay station; and
B14: sending, by the source relay station, a handover command to the UE.

4. The method of claim 3, wherein step B2 comprises:
B21: sending, by the source relay station, a serving network status transition command to the target relay station and forwarding the UE context and the cached data to the target relay station; and
B23: performing, by the UE, synchronization to the target relay station; and sending, by the target station, a network response including uplink resource allocation and timing advance to the UE.

5. The method of claim 2, wherein step B3 comprises:
B31: sending, by the target relay station, a downlink path handover request to the DeNB after the UE successfully accesses the target relay station;
B32: processing, by the DeNB, the downlink path handover request, and sending a downlink path handover response to the target relay station; and
B33: notifying, by the target relay station, the source relay station to release the UE context, which then releases resources.

6. A system for mobility management of a terminal in a radio relay system, comprising: a UE, a source relay station and a target relay station belonging to one DeNB and a DeNB; wherein an X2 interface is established between the source relay station and the target relay station, and a cell handover of the UE is performed between the source relay station and the target relay station via the X2 interface.

7. The system of claim 6, wherein a source base station comprises:
a handover determination module configured to perform a handover determination according to a measurement report sent by the UE;
a handover request module configured to send a handover request message to the target relay station via the X2 interface when the UE is permitted to perform a handover, wherein the handover request message includes a UL/DL GTP-U address of the source relay station;
a handover notification module configured to send a handover command to the UE after receiving a handover request response message from the target relay station which has permitted an access of the UE; and
a network status transition notification module configured to send a serving network status transition command to the target relay station and forward UE context and cached data to the target relay station.

8. The system of claim 7, wherein the target relay station comprises:
an admission execution module configured to perform admission control according to the handover request message sent by the handover request module of the source relay station and notify a handover request response module when the access of the UE is permitted;
a handover request response module configured to send a handover request response message to the source relay station via the X2 interface, wherein the handover request response message includes a UL/DL GTP-U address of the target relay station;
a downlink resource allocation module configured to send a network response including uplink resource allocation and timing advance to the UE which then performs synchronization and access to the target relay station;
a path handover request module configured to send a downlink handover request to the DeNB after the UE successfully accesses the target relay station; and
a resource release notification module configured to notify the source relay station to release the UE context after receiving the downlink path handover request.

9. The system of claim 6, wherein the DeNB comprises a link handover module configured to process the downlink path handover request and send a path handover response to the target relay station.
